# EUROPEAN PATENT SPECIFICATION

(11) **EP 4 046 795 B1**
(45) Date of publication and mention of the grant of the patent: **13.05.2026**
(21) Application number: 21158772.0
(22) Date of filing: 23.02.2021
(51) Int. Cl.: B32B 7/12, B32B 27/08, B32B 27/30, B32B 27/32, B32B 27/34

(54) **MULTILAYER POLYMER PACKAGING LINER**
MEHRSCHICHTIGE POLYMERVERPACKUNGSAUSKLEIDUNG
DOUBLURE D'EMBALLAGE POLYMÈRE MULTICOUCHE

(43) Date of publication of application: 24.08.2022
(73) Proprietor: Oerlemans Packaging B.V., 4265 GB Genderen (NL)
(72) Inventor: Verschaeren, Patrick Corneel Mathilde, 4265 GB Genderen (NL); Hanegraaf, Joan Antonius Adrianus Maria, 4265 GB Genderen (NL)
(74) Representative: Arnold & Siedsma

(56) References cited:
- EP-A1- 0 907 508
- EP-B1- 0 907 508
- BE-B1- 1 025 049
- US-A- 6 087 020

## Description

The present invention relates to a multilayer polymer packaging liner for packaging of expandable polystyrene (EPS) granulates. The present invention further relates to a method for producing the multilayer polymer packaging liner, and packaging material for EPS granules comprised of the multilayer polymer packaging liner and its use for packaging of EPS granules.

Polystyrene (C₈H₈)ₙ is a synthetic aromatic hydrocarbon thermoplastic polymer. Polystyrene can be solid or foamed, and is one of the most widely used plastics and include protective packaging using expanded polystyrene (EPS). EPS is a rigid, tough, closed-cell foam made of pre-expanded polystyrene beads. The manufacturing process for EPS starts with the production of polystyrene beads (~200 um in diameter) by suspending styrene monomers in water, where they undergo free-radical addition polymerization. The beads are then permeated with a blowing agent, often pentane, that enables the beads to be expanded forming EPS (also know as Styrofoam) which is commonly used as building insulation and packing material. The EPS beads or EPS granulate are subsequently packed in industrial packaging material.

Expandable polystyrene beads are a moulding material in the form of granules or beads, approximately 3 mm in diameter. The EPS granules may contain between 5% to 10% of a volatile hydrocarbon, most often pentane. During the polystyrene moulding process, the EPS granules are heated causing expansion and fusion, forming the familiar polymeric packaging material. However, during storage or transport, the material will release a portion of the pentane i.e. losing the blowing agent with which the EPS beads were permeated and which is needed during the moulding process to provide for the expanded polymeric packaging material.

Furthermore, risks associated with EPS are related to the flammable blowing agent and the combustible nature of the polymeric material. Explosion and/or fire are significant risks that must be prevented when storing EPS beads. The pentane blowing agent is liberated very slowly during storage. It is a highly flammable gas and can form explosive mixtures with air at concentrations between 1.4 % and 7.8 % volume. EPS granules being packaged have been found to generate flammable concentrations of gas in enclosed spaces, and have been involved in several major explosions in storage containers such as container ships. The release rate and thus loss of this pentane is increased with a rise in temperature and is affected by the quality and type of the packaging material and if this packaging material provides a sufficient gas barrier that reduces or prevents the pentane to be released from the EPS granules. Furthermore, packaging material for EPS should have antistatic properties to prevent the creation of spark or ignition during (un)loading of the EPS in the packaging material. The EPS packaging material has a surface resistance of at most 10¹² Ohm. Liners are mostly comprised of polyethylene (PE) which is non-polar. Therefore present PE liners have been mixed with antistatic additives or compounds, for example internally incorporated amine compounds, that migrates to the surface of the liner allowing for atmospheric dissipation of the static charge.

At present EPS granules are packaged and transported in specific octagonal packaging made of very strong corrugated cardboard (octa-bin), which consists of a base, sleeve and a lid, and comprises a polyethylene polyamide liner (PE + PA polymer film) that helps to preserve the quality of the EPS beads as long as possible, including a degree of prevention of pentane loss from the EPS granules. Many plastic liners are used as a polymer liner for packaging, depending on the permeability of the material to gases. However, during the production of the EPS granules and in order to reduce the loss of blowing agent (pentane), the warm extruded EPS granules (after being permeated with blowing agent) are packaged as quickly as possible into the container (e.g. an octa-bin) providing a gas barrier and reducing loss of the blowing agent. This results in that next to the warm EPS also air will be included that holds water vapor and will lead to condensation of water over time inside the container holding the warm EPS granules. This water condensation affects the quality of the EPS granules over time. The often used materials for films such as polyethylene (PE), polypropylene (PP) and polyamide (PA) form a barrier to water vapor and are therefore not optimal for use as packaging material for EPS. Furthermore, small proportions of the pentane are still being released to the atmosphere and this proportion is increased at elevated temperatures

Prior art liners are disclosed in BE1025049B1, US6087020A and EPO907508A1.

Considering the above, there is a need in the art for a packaging material suitable for EPS granules that provides an optimal gas barrier that prevents or strongly reduces the blowing agent being released into the atmosphere, while at the same time enables the release of water vapor from the packaging material thereby preventing or strongly reducing the condensation of water onto the packaged EPS granules. Furthermore the packaging material should maintain (or have improved) the antistatic properties of the packaging material comparable to present EPS packaging material to ensure safety and proper EPS (un)loading. In addition there is a need in the art for a method for producing such a packaging material suitable for EPS granules.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by a multilayer polymer packaging liner for packaging of expandable polystyrene (EPS) granulates, wherein the liner is comprised of at least one inner layer, preferably at least two inner layers, comprised of a polymer consisting of polyamide (PA) or ethylene vinyl alcohol (EVOH), preferably PA, and wherein the at least one inner layer comprises between 10 to 35 wt% of PA, or comprises between 2 to 10 wt% of EVOH based on the total weight of the liner, wherein the liner further comprises two or more adhesive polymer layers, and at least two outer layers comprised of a thermoplastic ethylene copolymer encapsulating said at least one inner layer and two or more adhesive polymer layers, wherein the adhesive polymer layers provide adhesion between the at least one inner layer and two or more outer layers of thermoplastic ethylene copolymer, and wherein the two or more adhesive polymer layers comprise between 10 to 20 wt%, preferably 12 to 17 wt%, more preferably at least 14 to 16 wt% of the total weight of the liner and wherein the two or more adhesive polymer layers each further comprise at least 80 wt% of a plastomer, in combination with polyethylene (PE), preferably at least 85 wt%, based on the total weight of each of the adhesive polymer layers, and wherein the two or more adhesive polymer layers are selected from the group consisting of maleic anhydride (MAH)-grafted PE polymer wherein the PE is of low density PE (LDPE) or linear low density PE (LLDPE), ethylene acrylic acid (EAA), ethylene methacrylic acid (EMAA), EMA (ethyl methacrylate), ethylene vinyl acetate (EVA), or blends thereof with LLDPE, preferably maleic anhydride (MAH)-grafted PE polymers, more preferably maleic anhydride (MAH)-grafted LLDPE, wherein the liner has an Oxygen Transmission Rate (OTR) of at most 150 cc/m²/24h, preferably at most 125 cc/m²/24h, more preferably at most 100 cc/m²/24h, as determined according to ASTM E398, and has a Water Vapor Transmission Rate (WVTR) of at least 7.5 g/m2/24h, preferably at least 10 g/m2/24h, more preferably at least 15 g/m2/24h, as determined according to ASTM D3985, and has a surface resistance of at most 10¹² Ω·m, preferably at most 10¹¹ Ω·m, more preferably at most 10¹⁰ Ω·m as determined according to ASTM D257.

For EPS packaging a gas barrier is needed for pentane containment, which is used for the foaming of PS, on the other hand higher water vapor permeability is needed to remove any condensation moisture formed during the loading of the liners with the warm EPS. The gas-barrier properties of packaging material are essential in preserving high levels of pentane in the packaged EPS granules, as determined by the Oxygen Transmission Rate (OTR) which can be extrapolated to the transmission rate of pentane gas through a material. The pentane transmission rate is about 1/143 of the OTR. In contrast the permeability tests for water vapour is performed by measuring and the Water Vapor Transmission Rate (WVTR) of the liner to determine the barrier properties in relation to water vapour transmission such as to be suitable for packaging of EPS granules. Results show that a liner comprising at least one inner layer of PA provides an optimal gas barrier to prevent the pentane to migrate from the EPS granules, while at the same time providing optimal permeability for water vapour to escape from the liner packaging material.

According to a preferred embodiment, the present invention relates to the multilayer polymer packaging liner, wherein the liner has a pentane transmission rate of at most 0.9 g/m2/24h, preferably at most 0.8 g/m2/24h, more preferably at most 0.7 g/m2/24h, as determined according to ASTM E398.

The adhesive polymer layers provide optimal antistatic properties the liner within the claimed ranges, wherein the liner should comprise at least 10 wt% of the adhesive layer. However, when the liner comprises more than 20 wt% of the adhesive polymer, the water vapour transmission will decrease drastically, thereby affecting the liner as packaging material for EPS. The multilayer packaging liner of present invention has a surface resistance of at most 10¹² Ω·m, which is needed to maintain the antistatic properties of the packaging material for EPS packaging and to ensure safety and proper EPS (un)loading. Because of the PA and EVA layer being polar, this prevents migration of an antistatic to the surface of the liner allowing for atmospheric dissipation of the static charge, i.e. preventing the antistatic properties on the outside of the liner material. In contrast to traditional liners comprised mostly of PE, the multilayer packaging liners of present invention comprises a core (middle layer) of for example PA and include non-polar adhesive polymer layers that include a non polar plastomer having antistatic properties that enables the migration of the antistatic to the surface of the liner allowing for atmospheric dissipation of the static charge. Since the middle layer is a polar PA layer, and inner migration of the antistatic compound is therefore avoided. Additionally, the excellent properties of the plastomer having a low melting point and being amorphous, result in an increased water vapour permeability of the polymer mixture of PE and plastomer. Below 80 wt% of plastomer in combination with PE, the WVTR values of the resulting liner decrease dramatically and will not be suitable for EPS packaging. Furthermore, the plastomer ensures a more rapid flow of polymer chains in the polymer melt during heat sealing, resulting in a heat sealing speed during production of the packaging material comprised of the liner of present invention to produce the EPS packaging material.

The present invention relates to the multilayer polymer packaging liner, wherein the two or more adhesive polymer layers is selected from the group consisting of maleic anhydride (MAH)-grafted PE polymer wherein the PE is of low density PE (LDPE) or linear low density PE (LLDPE), ethylene acrylic acid (EAA), ethylene methacrylic acid (EMAA), EMA (ethyl methacrylate), ethylene vinyl acetate (EVA), or blends thereof with LLDPE, preferably maleic anhydride (MAH)-grafted PE polymers, more preferably maleic anhydride (MAH)-grafted LLDPE. To construct multilayer liners (films), adhesive polymers or functional polymers are used to provide adhesion to other polymers such as PA or EVOH and/or PE layers in an extrusion process. Acid copolymers such as blends thereof with LLDPE, preferably blends of LLDPE and maleic anhydride (MAH) are suitable. These adhesives provide a strong and reliable grafting and bond to other substrates, i.e. EVOH, PA and PE layers in coextrusion processes of the multilayer liner of present invention.

The present invention relates to the multilayer polymer packaging liner, wherein the at least one inner layer comprises between 10 to 35 wt% of PA, preferably 20 to 30 wt%, more preferably 24 to 28 wt%, or comprises between 2 to 10 wt% of EVOH, preferably 4 to 9 wt%, more preferably 5 to 8 wt%, based on the total weight of the liner. The liner should comprise between 10 to 35 wt% of polyamide (PA), or between 2 to 10 wt% ethylene vinyl alcohol (EVOH) to ensure a proper blowing agent barrier of the resulting liner. The liner of present invention ensures that condensation of water on the EPS granules is prevented and blowing agent concentrations are maintained such to enable production of high quality expanded polystyrene when unpacked. Furthermore, the at least one inner layer of the liner of present invention may be comprised of a polymer alloy of the mixture of EVOH and polyethylene (PE), wherein the mixture comprises at most 80 wt% of PE, preferably at most 70 wt%, most preferably at most 65 wt%, based on the total weight of the EVOH-PE mixture, to ensure proper gas barrier properties and providing sufficient water vapour transmissibility of the inner layer.

According to yet another preferred embodiment, the present invention relates to the multilayer polymer packaging liner, wherein the at least two outer layers are comprised of thermoplastic ethylene copolymer comprise at least 35 wt%, preferably at least 50 wt%, more preferably at least 55 wt%, based on the total weight of the liner. If the liner comprises less than 35 wt% of ethylene copolymer the extrusion will affected and the liner will be more brittle, have reduced durability and puncture resistance.

According to another preferred embodiment, the present invention relates to the multilayer polymer packaging liner, wherein the at least two outer layers comprised of thermoplastic ethylene copolymer are one or more selected from the group consisting of ethylene vinyl acetate (EVA), ethylene butyl acrylate (EBA), ethylene methyl acrylate (EMA), ethylene ethyl acrylate (EEA), ethylene acrylic acid (EAA), ethylene methacrylic acid (EMAA), and ionomer, preferably EVA. The layers of ethylene copolymers in the liner are essential for the optimal removal of water vapor directly after packaging of the warm EPS in the liner material. Apart from contributing to a high water vapor permeability, the outer layer provides, flexibility, tear-, and impact resistance and sealing performance to the multilayer liner of present invention.

According to yet another preferred embodiment, the present invention relates to the multilayer polymer packaging liner, wherein the at least two outer layers comprised of thermoplastic ethylene copolymer each further comprise between 2 to 10 wt% of an antistatic additive, based on the total weight of each of the thermoplastic ethylene copolymer outer layers. The addition of the antistatic additives within these ranges to outer layer of the liner will further reduce the electrostatic charging on the polymer surfaces by reducing the surface resistance.

According to a preferred embodiment, the present invention relates to the multilayer polymer packaging liner, wherein the at least one inner layer has a total thickness of between 1 to 50 µm, preferably 10 to 30 µm, more preferably 15 to 20 µm. In case the inner layer becomes too thick, the water vapour barrier increases significantly which negatively impact the storage properties of the liner for EPS.

According to yet another preferred embodiment, the present invention relates to the multilayer polymer packaging liner, wherein the liner has a hot seal strength at a temperature of between 120 to 160 °C of at least 2 N/15mm, preferably at least 3 N/15mm as determined in machine direction by standard test method ASTM F1921. The hot seal strength (hot tack) is determined at various seal temperatures ranging from 100 to 170 °C by using a Hot tack J&B Instruments according to standard test method ASTM F1921, approximately 0.5 seconds after sealing, before the seal has cooled. The higher the hot seal strength, the faster the process can be using the polymer liner or film in producing the packaging material that has a strong enough seal. The plastomer present in the adhesive layer provides a rapid flow of polymer chains during the heat sealing process, resulting in an increased heat sealing speed during production of the packaging material.

According to another preferred embodiment, the present invention relates to the multilayer polymer packaging liner, wherein the at least one inner layer is comprised of PA, the two or more adhesive polymer layers are comprised of a mixture of LLDPE and a plastomer, and the at least two outer layers are comprised of EVA mixed with an antistatic additive.

According to yet another preferred embodiment, the present invention relates to the multilayer polymer packaging liner, wherein the multilayer polymer packaging liner is comprised of at least two inner layers, at least five layers of adhesive polymers and at least four outer layers of thermoplastic ethylene copolymer, wherein the two or more layers of adhesive polymers alternate with the inner layers and outer layers in a multilayer construction of the multilayer polymer packaging liner.

According to a preferred embodiment, the present invention relates to the multilayer polymer packaging liner, wherein the multilayer polymer packaging liner has a symmetric multiplayer structure. An example of a symmetric structure of a multiplayer liner of present invention comprised of two outer layers of EVA, two adhesive layers of a mixture of plastomer and PE and an inner layer of PA is; EVA - (plastomer + LLDPE) - PA- (plastomer + LLDPE) - EVA.

According to yet another preferred embodiment, the present invention relates to the multilayer polymer packaging liner, wherein the liner has a total thickness of 50 to 150 µm, preferably 70 to 125 µm, more preferably 80 to 100 µm. In case the polymer liner have a thickness of more than 200 microns, the liners become too stiff in order to run smoothly on a packaging line. Furthermore the water vapour permeability of the material will become to much affected resulting in water condensation on the EPS granulates when packaged.

The present invention, according to a second aspect, relates to a method for producing a multilayer polymer packaging liner according to any of the claims 1 to 12, wherein the method comprises the steps of,
a) melting of polyamide (PA) or ethylene vinyl alcohol (EVOH), a thermoplastic ethylene copolymer, and adhesive polymer to obtain a homogenous polymer melt per polymer,
b) co-extrusion and joining of multiple polymer films to form a single film structure with multiple layers of the polymer melt providing a multilayer polymer liner, wherein the liner is comprised of at least one inner layer, preferably at least two inner layers, comprised of a polymer selected from the group consisting of polyamide (PA), ethylene vinyl alcohol (EVOH), preferably PA, wherein the liner further comprises two or more adhesive polymer layers, and at least two outer layers comprised of a thermoplastic ethylene copolymer encapsulating said at least one inner layer and two or more adhesive polymer layers, and wherein the multilayer polymer packaging liner has a symmetric multiplayer structure,
c) cooling of the multilayer polymer liner by air to below 100 °C.

The multilayer polymer liner is produced via co-extrusion. Co-extrusion provides solutions to meet the barrier film functionality of an industrial packaging film, such as the gas and vapor barrier properties, durability (tensile properties, impact resistance), thickness and sealability of the liner or film. Multiple polymer films are co-extruded and joined together to form a single structure with multiple layers. This allows combining the desirable properties of multiple polymers into one structure with enhanced performance characteristics in terms of OTR, WVTR and antistatic properties for example.

According to yet another preferred embodiment, the present invention relates to the method for producing a multilayer polymer packaging liner of present invention, wherein the melting is performed at 160 to 240 °C, preferably 180 to 220 °C, most preferably 195 to 205 °C, and/or wherein the melting is performed at a pressure of 200 to 500 bar, preferably 250 to 400 bar, more preferably 300 to 350 bar. At the indicated temperature and pressure the polymer mixtures will become a homogenous mixture having an optimal distribution providing optimal material properties of the resulting film and finally liner being produced. If the temperature and pressure are too low no optimal homogenous melt is achieved resulting in a film/liner of inconsistent thickness and material properties throughout the material. If the temperature and pressure are too high, the polymer starts to degrade and oxidate and negatively affects the material properties, and furthermore the polymer melt will become to liquid to produce a film.

The present invention, according to a further aspect, relates to a packaging material for EPS granules comprised of multilayer polymer packaging liner. For examples octa-bin that are being lined with the multilayer liner of present invention for packaging of EPS, due to its optimal permeability of water vapor, while at the same time provide a optimal blow-gas barrier preventing pentane to escape from the EPS granules.

The present invention, according to a further aspect, relates to use of multilayer polymer packaging liner for packaging of EPS granules.

The present invention will be further detailed in the following example;

### Example I

### Gas permeability, water vapor permeability, and antistatic properties of multilayer polymer liners

Several multilayer polymer packaging liners for EPS packaging were tested for their gas and water vapor barrier properties and surface resistance properties (antistatic). Liner A was comprised of a middle layer of polyamide (PA, 28 wt%) that was encapsulated with four layers linear low density polyethylene (LLDPE, of which outer layers are 21 wt%, and the layer between the PA and outer layer are 15 wt%, based on the total weight of the liner), thus LLDPE-LLDPE-PA-LLDPE-LLDPE. Liner B was comprised of a middle layer of polyamide (PA, 28 wt%) that was encapsulated with four layers ethylene vinyl acetate (EVA, of which outer layers are 21 wt%, and the layer between the PA and outer layer are 15 wt%, based on the total weight of the liner), thus EVA-EVA-PA-EVA-EVA. Liner C was a multilayer polymer packaging liner according to present invention and was comprised of a middle layer of polyamide (PA, 28 wt%) that was encapsulated with two layers of maleic anhydride (MAH)-grafted LLDPE comprising plastomer (plastLLDPE, 6 wt% each), and two outer layers of ethylene vinyl acetate (EVA, 25 wt% each), thus EVA - plastLLDPE - PA- plastLLDPE - EVA.

The oxygen transmission rate (OTR) and the water vapor transmission rate (WVTR) are determined of each of the liners. The OTR is the steady state rate at which gas (oxygen) permeates through the liner at standard test conditions of 23°C and 0% relative humidity (RH). Values are expressed in cc/m2/24hr. Here, the OTR measured was related to the pentane gas transmission, where pentane transmission equals 1/143 OTR. The OTR was determined according to ASTM E398 standard test method using Mocon Ox-Tran measuring equipment.

The WVTR (also known as moisture vapor transmission rate) is a measure of the passage of water vapor through the film at standard test conditions of 38°C and 90% RH. The WVTR was determined according to ASTM D3985 standard test method using Mocon Permatran-W measuring equipment. Values are expressed in g/m2/24hr.

Furthermore, the Surface Resistivity of the multilayer polymer packaging liners was determined according to ASTM D257 using a digital surface resistance meter (Trustat ST-02) to measure and display surface resisitivity in the range of 10⁴ to 10¹⁴ Ω·m. A standard size specimen is placed between two electrodes. For sixty seconds, a voltage is applied and the resistance is measured. Surface resistivity is the resistance to leakage current along the surface of the liner material. The lower the surface resistivity, the more conductive the material is resulting in a higher antistatic property of the material. Table 1 below shows the results of the OTR, WVTR and Surface Resistivity tests.

**Table 1. Test results on OTR, WVTR and Surface Resistivity of the liners.**

| | **Liner A** | **Liner B** | **Liner C** |
|---|---|---|---|
| OTR (cc/m²/24h) | 100 | 100 | 100 |
| Pentane transmission rate (g/m²/24h) | 0.7 | 0.7 | 0.7 |
| WVTR (g/m²/24h) | 2 | 14 | 11 |
| Surface Resistivity (Ω·m) | 10¹¹ | 10¹³ | 10¹¹ |

The multilayer polymer packaging liner (Liner C) of present invention has sufficient low gas permeability to ensure that the pentane is kept within the EPS granules, and is comparable to present liners (liner A). The water vapor barrier function of the barrier film of present invention has been greatly reduced as compared to liner A to ensure that the water vapour that will be entrapped during packaging of the warm EPS directly after production is able to diffuse from the packaging material and avoid moisture or condensation on the EPS granules. In Liner B, although the OTR and WVTR are sufficient, the antistatic properties are insufficient for use as EPS packaging material. Finally the antistatic properties of the packaging material of present invention are sufficiently low to avoid the generation of sparks or ignition of the blowing agent present in the EPS and also ensures that EPS granules are easily (un)loaded when using the packaging material as a liner in for example octa-bins for packaging of EPS.

## Claims

1. Multilayer polymer packaging liner for packaging of expandable polystyrene (EPS) granulates, wherein the liner is comprised of at least one inner layer, preferably at least two inner layers, comprised of a polymer consisting of polyamide (PA) or ethylene vinyl alcohol (EVOH), preferably PA and wherein the at least one inner layer comprises between 10 to 35 wt% of PA, or comprises between 2 to 10 wt% of EVOH based on the total weight of the liner,
wherein the liner further comprises two or more adhesive polymer layers, and at least two outer layers comprised of a thermoplastic ethylene copolymer encapsulating said at least one inner layer and two or more adhesive polymer layers, wherein the adhesive polymer layers provide adhesion between the at least one inner layer and two or more outer layers of thermoplastic ethylene copolymer, and wherein the two or more adhesive polymer layers comprise between 10 to 20 wt%, preferably 12 to 17 wt%, more preferably at least 14 to 16 wt% of the total weight of the liner and wherein the two or more adhesive polymer layers each further comprise at least 80 wt% of a plastomer in combination with polyethylene (PE), preferably at least 85 wt%, based on the total weight of each of the adhesive polymer layers, and wherein the two or more adhesive polymer layers are selected from the group consisting of maleic anhydride (MAH)-grafted PE polymer wherein the PE is of low density PE (LDPE) or linear low density PE (LLDPE), ethylene acrylic acid (EAA), ethylene methacrylic acid (EMAA), EMA (ethyl methacrylate), ethylene vinyl acetate (EVA), or blends thereof with LLDPE, preferably maleic anhydride (MAH)-grafted PE polymers, more preferably maleic anhydride (MAH)-grafted LLDPE,
wherein the liner has an Oxygen Transmission Rate (OTR) of at most 150 cc/m²/24h, preferably at most 125 cc/m²/24h, more preferably at most 100 cc/m²/24h, as determined according to ASTM E398, and has a Water Vapor Transmission Rate (WVTR) of at least 7.5 g/m2/24h, preferably at least 10 g/m2/24h, more preferably at least 15 g/m2/24h, as determined according to ASTM D3985, and has a surface resistance of at most 10¹² Ω·m, preferably at most 10¹¹ Ω·m, more preferably at most 10¹⁰Ω·m as determined according to ASTM D257.

2. Multilayer polymer packaging liner according to claim 1, wherein the at least one inner layer comprises between 20 to 30 wt%, more preferably 24 to 28 wt% of PA, or comprises between 4 to 9 wt%, more preferably 5 to 8 wt% of EVOH, , based on the total weight of the liner.

3. Multilayer polymer packaging liner according to claim 1 or 2, wherein the at least two outer layers are comprised of thermoplastic ethylene copolymer comprise at least 35 wt%, preferably at least 50 wt%, more preferably at least 55 wt%, based on the total weight of the liner.

4. Multilayer polymer packaging liner according to any of the claims 1 to 3, wherein the at least two outer layers comprised of thermoplastic ethylene copolymer are one or more selected from the group consisting of ethylene vinyl acetate (EVA), ethylene butyl acrylate (EBA), ethylene methyl acrylate (EMA), ethylene ethyl acrylate (EEA), ethylene acrylic acid (EAA), ethylene methacrylic acid (EMAA), and ionomer, preferably EVA.

5. Multilayer polymer packaging liner according to any of the claims 1 to 4, wherein the at least two outer layers comprised of thermoplastic ethylene copolymer each further comprise between 2 to 10 wt% of an antistatic additive, based on the total weight of each of the thermoplastic ethylene copolymer outer layers.

6. Multilayer polymer packaging liner according to any of the claims 1 to 5, wherein the at least one inner layer has a total thickness of between 1 to 50 µm, preferably 10 to 30 µm, more preferably 15 to 20 µm.

7. Multilayer polymer packaging liner according to any of the claims 1 to 6, wherein the liner has a hot seal strength at a temperature of between 120 to 160 °C of at least 1.2 N/15mm, preferably at least 1.4 N/15mm as determined in machine direction by standard test method ASTM F1921.

8. Multilayer polymer packaging liner according to any of the claims 1 to 7, wherein the at least one inner layer is comprised of PA, the two or more adhesive polymer layers are comprised of a mixture of LLDPE and a plastomer, and the at least two outer layers are comprised of a mixture of EVA and an antistatic additive.

9. Multilayer polymer packaging liner to any of the claims 1 to 8, wherein the multilayer polymer packaging liner is comprised of at least two inner layers, at least five layers of adhesive polymers and at least four outer layers of thermoplastic ethylene copolymer, wherein the two or more layers of adhesive polymers alternate with the inner layers and outer layers in a multilayer construction of the multilayer polymer packaging liner, wherein the multilayer polymer packaging liner has a symmetric multiplayer structure..

10. Multilayer polymer packaging liner according to any of the claims 1 to 9, wherein the liner has a total thickness of 50 to 150 µm, preferably 70 to 125 µm, more preferably 80 to 100 µm.

11. A method for producing a multilayer polymer packaging liner according to any of the claims 1 to 10, wherein the method comprises the steps of,
a) melting of polyamide (PA) or ethylene vinyl alcohol (EVOH), a thermoplastic ethylene copolymer, and adhesive polymer to obtain a homogenous polymer melt per polymer,
b) co-extrusion and joining of multiple polymer films to form a single film structure with multiple layers of the polymer melt providing a multilayer polymer liner, wherein the liner is comprised of at least one inner layer, preferably at least two inner layers, comprised of a polymer selected from the group consisting of polyamide (PA), ethylene vinyl alcohol (EVOH), preferably PA, wherein the liner further comprises two or more adhesive polymer layers, and at least two outer layers comprised of a thermoplastic ethylene copolymer encapsulating said at least one inner layer and two or more adhesive polymer layers, and wherein the multilayer polymer packaging liner has a symmetric multiplayer structure,
c) cooling of the multilayer polymer liner by air to below 100 °C.

12. Method for producing a multilayer polymer packaging liner according to claim 11, wherein the melting is performed at 160 to 240 °C, preferably 180 to 220 °C, most preferably 195 to 205 °C, and/or wherein the melting is performed at a pressure of 200 to 500 bar, preferably 250 to 400 bar, more preferably 300 to 350 bar.

13. Packaging material for EPS granules comprised of multilayer polymer packaging liner according to any of the claims 1 to 10.

14. Use of multilayer polymer packaging liner according to any of the claims 1 to 10 for packaging of EPS granules.

## Patentansprüche

1. Mehrschichtige Polymer-Verpackungsauskleidung zum Verpacken von expandierbaren Polystyrol-Granulaten (EPS-Granulaten), wobei die Auskleidung aus mindestens einer inneren Schicht, vorzugsweise mindestens zwei inneren Schichten besteht, die aus einem Polymer bestehen, das aus Polyamid (PA) oder Ethylenvinylalkohol (EVOH), vorzugsweise PA, zusammengesetzt ist, und wobei die mindestens eine innere Schicht zwischen 10 bis 35 Gew.-% PA umfasst, oder zwischen 2 bis 10 Gew.-% EVOH, bezogen auf das Gesamtgewicht der Auskleidung, umfasst,
wobei die Auskleidung ferner zwei oder mehr Klebepolymerschichten und mindestens zwei äußere Schichten, die aus einem thermoplastischen Ethylencopolymer bestehen, die die mindestens eine innere Schicht und zwei oder mehr Klebepolymerschichten einkapseln, umfasst, wobei die Klebepolymerschichten eine Klebewirkung zwischen der mindestens einen inneren Schicht und zwei oder mehr äußeren Schichten aus thermoplastischem Ethylencopolymer bereitstellen und wobei die zwei oder mehr Klebepolymerschichten zwischen 10 bis 20 Gew.-%, vorzugsweise 12 bis 17 Gew.-%, mehr bevorzugt mindestens 14 bis 16 Gew.-% des Gesamtgewichts der Auskleidung umfassen und wobei die zwei oder mehr Klebepolymerschichten jeweils ferner mindestens zu 80 Gew.-% ein Plastomer in Kombination mit Polyethylen (PE), vorzugsweise mindestens zu 85 Gew.-%, bezogen auf das Gesamtgewicht jeder der Klebepolymerschichten, umfassen und wobei die zwei oder mehr Klebepolymerschichten ausgewählt sind aus der Gruppe, die aus mit Maleinsäureanhydrid (MAH) gepfropftem PE-Polymer, wobei das PE PE geringer Dichte (LDPE) oder lineares PE geringer Dichte (LLDPE) ist, Ethylacrylsäure (EAA), Ethylmethacrylsäure (EMAA), EMA (Ethylmethacrylat), Ethylvinylacetat (EVA), oder Gemische davon mit LLDPE, vorzugsweise mit Maleinsäureanhydrid (MAH) gepfropften PE-Polymeren, mehr bevorzugt mit Maleinsäureanhydrid (MAH) gepfropftem LLDPE, zusammengesetzt ist,
wobei die Auskleidung eine Sauerstoffübertragungsrate (OTR) von höchstens 150 cc/m²/24h, vorzugsweise höchstens 125 cc/m²/24h, mehr bevorzugt höchstens 100 cc/m²/24h, wie gemäß ASTM E398 bestimmt, aufweist und eine Wasserdampfübertragungsrate (WVTR) von mindestens 7,5 g/m2/24h, vorzugsweise mindestens 10 g/m2/24h, mehr bevorzugt mindestens 15 g/m2/24h, wie gemäß ASTM D3985 bestimmt, aufweist und einen Oberflächenwiderstand von höchstens 10¹² Ω-m, vorzugsweise höchstens 10¹¹ Ω-m, mehr bevorzugt höchstens 10¹⁰ Ω-m wie gemäß ASTM D257 bestimmt, aufweist.

2. Mehrschichtige Polymer-Verpackungsauskleidung nach Anspruch 1, wobei die mindestens eine innere Schicht zwischen 20 bis 30 Gew.-%, mehr bevorzugt 24 bis 28 Gew.-% PA umfasst oder zwischen 4 bis 9 Gew.-%, mehr bevorzugt 5 bis 8 Gew.-% EVOH umfasst, bezogen auf das Gesamtgewicht der Auskleidung.

3. Mehrschichtige Polymer-Verpackungsauskleidung nach Anspruch 1 oder 2, wobei die mindestens zwei äußeren Schichten aus thermoplastischem Ethylencopolymer bestehen, das mindestens 35 Gew.-%, vorzugsweise mindestens 50 Gew.-%, mehr bevorzugt mindestens 55 Gew.-%, bezogen auf das Gesamtgewicht der Auskleidung, umfasst.

4. Mehrschichtige Polymer-Verpackungsauskleidung nach einem der Ansprüche 1 bis 3, wobei die mindestens zwei äußeren Schichten, die aus thermoplastischem Ethylencopolymer bestehen, eine oder mehrere sind, die ausgewählt sind aus der Gruppe, die aus Ethylenvinylacetat (EVA), Ethylenbutylacrylat (EBA), Ethylenmethylacrylat (EMA), Ethylethylacrylat (EEA), Ethylacrylsäure (EAA), Ethylmethacrylsäure (EMAA) und Ionomer, vorzugsweise EVA, zusammengesetzt ist.

5. Mehrschichtige Polymer-Verpackungsauskleidung nach einem der Ansprüche 1 bis 4, wobei die mindestens zwei äußeren Schichten, die aus thermoplastischem Ethylencopolymer bestehen, jeweils ferner zwischen 2 bis 10 Gew.-% ein antistatisches Additiv, bezogen auf das Gesamtgewicht jeder der äußeren Schichten aus thermoplastischem Ethylencopolymer, umfassen.

6. Mehrschichtige Polymer-Verpackungsauskleidung nach einem der Ansprüche 1 bis 5, wobei die mindestens eine innere Schicht eine Gesamtdicke zwischen 1 bis 50 µm, vorzugsweise 10 bis 30 µm, mehr bevorzugt 15 bis 20 µm, aufweist.

7. Mehrschichtige Polymer-Verpackungsauskleidung nach einem der Ansprüche 1 bis 6, wobei die Auskleidung eine Heißsiegelfestigkeit bei einer Temperatur zwischen 120 bis 160 °C von mindestens 1,2 N/15 mm, vorzugsweise mindestens 1,4 N/15 mm, wie in Maschinenrichtung durch das Standardprüfverfahren ASTM F1921 bestimmt, aufweist.

8. Mehrschichtige Polymer-Verpackungsauskleidung nach einem der Ansprüche 1 bis 7, wobei die mindestens eine innere Schicht aus PA besteht, die zwei oder mehr Klebepolymerschichten aus einer Mischung aus LLDPE und einem Plastomer bestehen, und die mindestens zwei äußeren Schichten aus einer Mischung aus EVA und einem antistatischen Additiv bestehen.

9. Mehrschichtige Polymer-Verpackungsauskleidung nach einem der Ansprüche 1 bis 8, wobei die mehrschichtige Polymer-Verpackungsauskleidung aus mindestens zwei inneren Schichten, mindestens fünf Schichten aus Klebepolymeren und mindestens vier äußeren Schichten aus thermoplastischem Ethylencopolymer besteht, wobei die zwei oder mehr Schichten aus Klebepolymeren mit den inneren Schichten und den äußeren Schichten in einem mehrschichtigen Aufbau der mehrschichtigen Polymer-Verpackungsauskleidung alternieren, wobei die mehrschichtige Polymer-Verpackungsauskleidung eine symmetrische Mehrschichtstruktur aufweist.

10. Mehrschichtige Polymer-Verpackungsauskleidung nach einem der Ansprüche 1 bis 9, wobei die Auskleidung eine Gesamtdicke von 50 bis 150 µm, vorzugsweise 70 bis 125 µm, mehr bevorzugt 80 bis 100 µm, aufweist.

11. Verfahren zum Erzeugen einer mehrschichtigen Polymer-Verpackungsauskleidung nach einem der Ansprüche 1 bis 10, wobei das Verfahren die Schritte umfasst,
a) Schmelzen von Polyamid (PA) oder Ethylenvinylalkohol (EVOH), einem thermoplastischen Ethylencopolymer, und Klebepolymer, um eine homogene Polymerschmelze pro Polymer zu erhalten,
b) Koextrudieren und Verbinden mehrerer Polymerfolien, um eine einzige Folienstruktur mit mehreren Schichten der Polymerschmelze, die eine mehrschichtige Polymerauskleidung bereitstellt, auszubilden, wobei die Auskleidung aus mindestens einer inneren Schicht, vorzugsweise mindestens zwei inneren Schichten besteht, die aus einem Polymer bestehen, das ausgewählt ist aus der Gruppe, die aus Polyamid (PA), Ethylenvinylalkohol (EVOH), vorzugsweise PA, zusammengesetzt ist, wobei die Auskleidung ferner zwei oder mehr Klebepolymerschichten und mindestens zwei äußere Schichten, die aus einem thermoplastischen Ethylencopolymer bestehen, die die mindestens eine innere Schicht und zwei oder mehr Klebepolymerschichten einkapseln, umfasst, und wobei die mehrschichtige Polymer-Verpackungsauskleidung eine symmetrische Mehrschichtstruktur aufweist,
c) Abkühlen der mehrschichtigen Polymer-Auskleidung durch Luft auf unter 100 °C.

12. Verfahren zum Erzeugen einer mehrschichtigen Polymer-Verpackungsauskleidung nach Anspruch 11, wobei das Schmelzen bei 160 bis 240 °C, vorzugsweise 180 bis 220 °C, am meisten bevorzugt 195 bis 205 °C, durchgeführt wird und/oder wobei das Schmelzen bei einem Druck von 200 bis 500 bar, vorzugsweise 250 bis 400 bar, mehr bevorzugt 300 bis 350 bar, durchgeführt wird.

13. Verpackungsmaterial für EPS-Granulat, das eine mehrschichtige Polymer-Verpackungsauskleidung nach einem der Ansprüche 1 bis 10 umfasst.

14. Verwendung einer mehrschichtigen Polymer-Verpackungsauskleidung nach einem der Ansprüche 1 bis 10 zur Verpackung von EPS-Granulat.

## Revendications

1. Revêtement d'emballage polymère multicouche pour emballage de granulés de polystyrène expansible (EPS), dans lequel le revêtement est constitué d'au moins une couche interne, de préférence au moins deux couches internes, constituées d'un polymère constitué de polyamide (PA) ou d'éthylène-alcool de vinyle (EVOH), de préférence PA et dans lequel l'au moins une couche interne comprend entre 10 et 35 % en poids de PA, ou comprend entre 2 et 10 % en poids d'EVOH sur la base du poids total du revêtement,
dans lequel le revêtement comprend en outre deux couches de polymère adhésif ou plus, et au moins deux couches externes constituées d'un copolymère d'éthylène thermoplastique encapsulant lesdites au moins une couche interne et deux couches de polymère adhésif ou plus, dans lequel les couches de polymère adhésif assurent l'adhérence entre l'au moins une couche interne et deux couches externes ou plus de copolymère d'éthylène thermoplastique, et dans lequel les deux couches de polymère adhésif ou plus constituent entre 10 et 20 % en poids, de préférence 12 à 17 % en poids, plus préférablement au moins 14 à 16 % en poids du poids total du revêtement et dans lequel les deux couches de polymère adhésif ou plus constituent chacune en outre au moins 80 % en poids d'un plastomère en combinaison avec du polyéthylène (PE), de préférence au moins 85 % en poids, sur la base du poids total de chacune des couches de polymère adhésif, et dans lequel les deux couches de polymère adhésif ou plus sont choisies dans le groupe constitué de polymère PE greffé à l'anhydride maléique (MAH), dans lequel le PE est un PE de faible densité (LDPE) ou un PE de faible densité linéaire (LLDPE), un acide éthylène-acrylique (EAA), un acide éthylène méthacrylique (EMAA), un EMA (méthacrylate d'éthyle), de l'éthylène-acétate de vinyle (EVA), ou des mélanges de ceux-ci avec du LLDPE, de préférence des polymères PE greffés à l'anhydride maléique (MAH), plus préférablement du LLDPE greffé à l'anhydride maléique (MAH),
dans lequel le revêtement a un taux de transmission d'oxygène (OTR) d'au plus 150 cm3/m²/24 h, de préférence au plus 125 cm3/m²/24 h, plus préférablement au plus 100 cm3/m²/24 h, tel que déterminé selon la norme ASTM E398, et a un taux de transmission de vapeur d'eau (WVTR) d'au moins 7,5 g/m2/24 h, de préférence d'au moins 10 g/m2/24 h, plus préférablement au moins 15 g/m2/24 h, tel que déterminé selon la norme ASTM D3985, et a une résistance de surface d'au plus 10¹² Ω-m, de préférence au plus 10¹¹ Q-m, plus préférablement au plus 10¹⁰ Ω-m telle que déterminée selon la norme ASTM D257.

2. Revêtement d'emballage polymère multicouche selon la revendication 1, dans lequel l'au moins une couche interne comprend entre 20 et 30 % en poids, plus préférablement 24 à 28 % en poids de PA, ou comprend entre 4 et 9 % en poids, plus préférablement 5 à 8 % en poids d'EVOH, sur la base du poids total du revêtement.

3. Revêtement d'emballage polymère multicouche selon la revendication 1 ou 2, dans lequel les au moins deux couches externes sont constituées de copolymère d'éthylène thermoplastique et constituent au moins 35 % en poids, de préférence au moins 50 % en poids, plus préférablement au moins 55 % en poids, sur la base du poids total du revêtement.

4. Revêtement d'emballage polymère multicouche selon l'une quelconque des revendications 1 à 3, dans lequel les au moins deux couches externes constituées de copolymère d'éthylène thermoplastique sont une ou plusieurs couches choisies dans le groupe constitué d'éthylène-acétate de vinyle (EVA), éthylène-acrylate de butyle (EBA), éthylène-acrylate de méthyle (EMA), éthylène-acrylate d'éthyle (EEA), éthylène-acide acrylique (EAA), éthylène-acide méthacrylique (EMAA), et ionomère, de préférence EVA.

5. Revêtement d'emballage polymère multicouche selon l'une quelconque des revendications 1 à 4, dans lequel les au moins deux couches externes constituées de copolymère d'éthylène thermoplastique comprennent chacune en outre entre 2 et 10 % en poids d'un additif antistatique, sur la base du poids total de chacune des couches externes de copolymère d'éthylène thermoplastique.

6. Revêtement d'emballage polymère multicouche selon l'une quelconque des revendications 1 à 5, dans lequel l'au moins une couche interne a une épaisseur totale de 1 à 50 µm, de préférence 10 à 30 µm, plus préférablement 15 à 20 µm.

7. Revêtement d'emballage polymère multicouche selon l'une quelconque des revendications 1 à 6, dans lequel le revêtement a une résistance au scellage à chaud à une température comprise entre 120 et 160 °C d'au moins 1,2 N/15 mm, de préférence d'au moins 1,4 N/15 mm telle que déterminée dans le sens machine par le procédé d'essai normalisé ASTM F1921.

8. Revêtement d'emballage polymère multicouche selon l'une quelconque des revendications 1 à 7, dans lequel l'au moins une couche interne est constituée de PA, les deux couches de polymère adhésif ou plus sont constituées d'un mélange de LLDPE et d'un plastomère, et les au moins deux couches externes sont constituées d'un mélange d'EVA et d'un additif antistatique.

9. Revêtement d'emballage polymère multicouche selon l'une quelconque des revendications 1 à 8, dans lequel le revêtement d'emballage polymère multicouche est composé d'au moins deux couches internes, d'au moins cinq couches de polymère adhésif et d'au moins quatre couches externes de copolymère d'éthylène thermoplastique, dans lequel les deux couches de polymère adhésif ou plus alternent avec les couches internes et externes dans une construction multicouche du revêtement d'emballage polymère multicouche, dans lequel le revêtement d'emballage polymère multicouche a une structure multicouche symétrique.

10. Revêtement d'emballage polymère multicouche selon l'une quelconque des revendications 1 à 9, dans lequel le revêtement a une épaisseur totale de 50 à 150 µm, de préférence 70 à 125 µm, plus préférablement 80 à 100 µm.

11. Procédé de production d'un revêtement d'emballage polymère multicouche selon l'une quelconque des revendications 1 à 10, dans lequel le procédé comprend les étapes consistant à,
a) faire fondre du polyamide (PA) ou de l'éthylène-alcool de vinyle (EVOH), un copolymère d'éthylène thermoplastique, et un polymère adhésif pour obtenir une masse fondue polymère homogène par polymère,
b) coextruder et assembler de multiples films polymères pour former une structure de film unique avec de multiples couches de polymère fondu fournissant un revêtement polymère multicouche, dans lequel le revêtement est constitué d'au moins une couche interne, de préférence au moins deux couches internes, constituées d'un polymère choisi dans le groupe constitué de polyamide (PA), éthylène-alcool de vinyle (EVOH), de préférence du PA, dans lequel le revêtement comprend en outre deux couches de polymère adhésif ou plus, et au moins deux couches externes constituées d'un copolymère d'éthylène thermoplastique encapsulant lesdites au moins une couche interne et deux couches de polymère adhésif ou plus, et dans lequel le revêtement d'emballage polymère multicouche a une structure multicouche symétrique,
c) refroidir le revêtement d'emballage multicouche à l'air en dessous de 100 °C.

12. Procédé de production d'un revêtement d'emballage polymère multicouche selon la revendication 11, dans lequel la fusion est réalisée à 160 à 240 °C, de préférence 180 à 220 °C, le plus préférablement 195 à 205 °C, et/ou dans lequel la fusion est réalisée à une pression de 200 à 500 bar, de préférence 250 à 400 bar, plus préférablement 300 à 350 bar.

13. Matériau d'emballage pour granulés d'EPS constitué d'un revêtement d'emballage polymère multicouche selon l'une quelconque des revendications 1 à 10.

14. Utilisation d'un revêtement d'emballage polymère multicouche selon l'une quelconque des revendications 1 à 10 pour un emballage de granulés d'EPS.
